(19) Europäisches Patentamt
European Patent Office
Office européen des brevets

(11) EP 2 283 056 B1

(12) **EUROPEAN PATENT SPECIFICATION**

(45) Date of publication and mention of the grant of the patent:
**26.09.2012 Bulletin 2012/39**

(21) Application number: **09749928.9**

(22) Date of filing: **22.05.2009**

(51) Int Cl.:
***C08G 18/38*** (2006.01) ***C08L 63/00*** (2006.01)
***C08L 63/02*** (2006.01) ***C08L 75/00*** (2006.01)
***C09D 163/00*** (2006.01) ***C09D 163/02*** (2006.01)
***C09D 175/02*** (2006.01) ***C09D 175/04*** (2006.01)

(86) International application number:
**PCT/EP2009/056248**

(87) International publication number:
**WO 2009/141438 (26.11.2009 Gazette 2009/48)**

(54) **NOVEL FAST CURING ULTRA HIGH SOLIDS LOW VOC COATING SYSTEM FOR AGGRESSIVE CORROSIVE ENVIRONMENTS**

NEUARTIGES BESCHICHTUNGSSYSTEM ZUR SCHNELLHÄRTUNG VON ULTRAHOCHFESTSTOFFEN MIT NIEDRIGEM VOC-GEHALT FÜR STARK ÄTZENDE UMGEBUNGEN

SYSTEME NOUVEAU DE REVETEMENT A FAIBLES COMPOSES ORGANIQUES VOLATILES DE SOLIDES ULTRA ELEVES A DURCISSEMENT RAPIDE POUR DES ENVIRONNEMENTS CORROSIFS AGRESSIFS

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.05.2008 EP 08156796**

(43) Date of publication of application:
**16.02.2011 Bulletin 2011/07**

(60) Divisional application:
**12166282.9 / 2 484 708**

(73) Proprietor: **Hempel A/S**
**2800 Lyngby (DK)**

(72) Inventors:
- **HANSEN, Karl-Johan**
  **Ramsølille**
  **DK-4622 Havdrup (DK)**
- **NYSTEEN, Søren Mørch**
  **DK-2830 Virum (DK)**

(74) Representative: **Inspicos A/S**
**Kogle Allé 2**
**P.O. Box 45**
**2970 Hørsholm (DK)**

(56) References cited:
**EP-A- 0 257 513** **WO-A-2006/119770**
**US-A- 5 126 170** **US-A- 5 987 727**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 283 056 B1

## Description

FIELD OF THE INVENTION

The present invention relates to novel fast curing coating systems consisting of an epoxy primer and a polyurea top-coat. The coating systems have improved drying time and low VOC and still maintain excellent rust creep resistance. The present invention provides improved drying time and low VOC by using an ultra high solid polyurea top-coat on top of an epoxy primer. The coating systems of the present invention are non-thermosetting compositions.

BACKGROUND OF THE INVENTION

Epoxy coatings are used mainly as part of an anti-corrosive coating system on steel substrates due to outstanding corrosion and chemical resistance.

Epoxy coating compositions are typically one or two-component products. If the product is two-component, component one normally consists of an epoxy base and component two consists of a curing agent. If the epoxy is a zinc epoxy, the zinc will normally be present in the base composition.

Zinc epoxies are superior to standard epoxies concerning anticorrosive properties due to their function as a sacrificial anode applied directly on top of the clean steel surface. When the coating layer is damaged the zinc will protect the damage by a galvanic process. The function is similar to that of galvanized steel.

Epoxies can be used as a primer, *i.e.* first coating layer in a multiple coat system with subsequent layers of suitable generic types of coatings, or as an intermediate coat with subsequent suitable coats *e.g.* polyurethane or polyurea, or as a top-coat. However, epoxy paints can also be used as one-coat systems.

Polyurea is the general term used for coatings based on amines reacted with iso-cyanates or poly-isocyanates. The polymerization reaction between amine and isocyanates is in general extremely fast. Both aromatic and aliphatic isocyanates are used in polyurea coatings. However, it is only aliphatic iso-cyanates that give acceptable outdoor durability.

Poly aspartic acid esters are a special type of polyurea binder where an amine is pre-reacted with di-ethyl maleate. The amine functionality is by this pre-reaction becoming partly sterically hindered. The reaction speed is dependent on the amine used.

Poly aspartic esters are available in different reaction speed from fast to slow reaction polymers.

Polyurea top-coats based on poly aspartic acid esters are well known to give excellent outdoor durability with excellent gloss and color stability. Poly aspartic esters can be designed to give fast cure at ambient condition and with the partly sterical hindrance of the amine the reaction speed gives a reasonable pot-life to be handled in either two-component application equipment or standard airless spray equipment.

Epoxy and polyurea paint systems are normally used where superior corrosion protection and fast process time is needed. Such paint systems are designed to be used in aggressive corrosive environments like off-shore platforms, windmill towers, steel chimneys, power stations, steel bridges, cranes etc. in costal, off-shore, or industrial environments, but also tidal zone areas where fast salt water resistance is required.

Corrosive environments are rated according to ISO 12944 on a scale from C2 to C5 with C2 being mildly corrosive and C5 being an aggressively corrosive environment.

In recent years faster curing products have appeared. Fast curing lower the overall processing time and has become a very important parameter for paint applicators and contractors. However it has so far only been possible to decrease the curing time to a certain level if the workability and corrosion properties should be preserved.

The curing process starts on the surface of the coating. When curing is too fast the soft uncured part of the coating will not have sufficient strength to "carry" the stress built up during curing and defects will develop on the surface leading to subsequent loss of adhesion, cohesion and corrosion problems.

Another important parameter is the content of Volatile Organic Compound (VOC) of a coating system. VOC emissions influence the environment in a negative way. In recent years there has been an increasing focus on environmental aspects and awareness and discussions of green house effect. It is therefore an important parameter to keep the VOC of a coating system to an absolute minimum.

So far, the coating solution for the mentioned application areas has been medium solids coatings used in either two or three coat systems with relatively long drying /curing schedules resulting in long process time and with relatively high VOC emissions.

Document WO 2006/119770 A is directed to epoxy paint coating compositions. In tables 2 and 9, compositions comprising epoxy based binder systems are disclosed. Moreover, WO 2006/119770 A suggests the use of zinc fibres (see page 8 line 32). Steel panels are coated with a coating having a dry film thickness of 300 μm. All the compositions of WO 2006/119770 A have a volume solids % (percentage of the solid constituents in the composition) of maximum 70,2%. Furthermore, no polyurea-based binder system is used on top of the epoxy primer.

Document US 5 987 727 A discloses automobile parts lacquered with a coating system. The first layer of the coating comprises a bisphenol A-based epoxy resin, whereas the second layer of the coating comprises an amine-blocked sulfonic acid and a blocked polyisocyanate which leads to a polyurea (see example 1). The compositions of US 5 987 727 A have a volume solids % (percentage of the solid constituents in the composition) of maximum 70% (see column 5, I.39-40). Moreover, the coating system has a total dry film thickness of at most 45 μm.

Document EP 0 257 513 A discloses an epoxy primer composition having a volume solids % of 87%. No top-coat comprising a polyurea-based binder system is used in EP 0 257 513 A. Moreover, the thickness of the film in example A of EP 0 257 513 A is only 7,6 μm.

Document US 5 126 170 A discloses in the examples 7 and 8 polyurea-based binder systems having a volume solids % of 90%. No primer comprising an epoxy-based binder system is used in US 5 126 170 A. Moreover, the thickness of the film is not disclosed in US 5 126 170 A.

There is thus a need for a coating system for aggressive corrosive environments, enabling faster processing and lower VOC.

## SUMMARY OF THE INVENTION

It has now surprisingly been discovered that it is possible to provide a non-thermosetting coating system consisting of an epoxy primer composition and a polyurea top-coat composition with significantly reduced processing time and low VOC, which still provides the superior protection needed for aggressive corrosion classes.

The present invention provides a high solids coating system consisting of an epoxy primer and a top-coat, enabling faster processing time and low VOC.

More particular, the present invention relates to coating system according to claim 1.

The present invention also provides a coated structure carrying such a coating system, cf, claim 9, and a method for the establishment of a coated structure, cf. claim 10.

## DETAILED DESCRIPTION OF THE INVENTION

### *The Coating System*

As mentioned above, the present invention relates to a coating system consisting of:

(i) a first layer of a primer composition comprising an epoxy-based binder system, said primer composition having a volume solids % of at least 82 %; and

(ii) a second layer of top-coat composition comprising a polyurea-based binder system, said top-coat composition having a volume solids % of at least 82 %.

When used herein, the expression "coating system" is intended to mean the combination of the first and second layers in wet form when applied to the surface of a substrate. It should be understood that the second layer is applied subsequent to the first layer so as to be in direct contact with said first layer. It should further be understood that one or more layers of other coating compositions may be applied to the surface of the substrate prior to the application of the first layer, although such other coating layer are generally not necessary or desirable. Moreover, it should be understood that one or more layers of other coating compositions may be applied subsequent to the application of the second layer, although such other coating layer are generally not necessary or desirable.

Hence, in a preferred embodiment, the coating system consists of the above-defined first and second layers, where the first layer is in direct contact with the surface of the substrate and where the second layer is the outermost layer.

The coating systems disclosed herein are designed to cure at ambient temperatures (i.e. typically the temperature at the location at which the coating system is applied, e.g. in paint shops or outdoor where the temperature will depend on the general climate at the geographical location), e.g. at temperatures of 0-50 °C (either in cold or in very hot regions of the world), such as 5-30 °C, in particular about 15-25 °C, such as around 20°C. In other words, the coating system disclosed herein is of the non-thermosetting type. In contrast hereto, other coating systems are of the thermosetting type, which require heating of the substrate with the coating to temperature of several hundred degrees Celsius. Such conditions are of course in practise inapplicable with the types of substrates for which the present coating systems are designed.

### *High Volume Solids Percentage*

A particular feature of the coating system of the invention is the very high volume solids % ("VS%") and thereby

the low content of volatile organic compounds (VOC).

In fact, the primer composition has a volume solids % of at least 82 %, such as at least 84 %, e.g. at least 85 %. Similarly, the top-coat composition has a volume solids % of at least 82 %, such as at least 84 %, e.g. at least 85 %.

This being said, and most importantly, the weighed average volume solids % of the coating system is at least 84 %, such as at least 85 %, e.g. at least 86 %.

The volume solids (expressed in %) is often referred to as "VS%". VS% is determined according to ISO 3233 with the modification that drying is carried out at 23 °C and 50 % relative humidity for 7 days instead of drying at higher temperatures.

The expression "weighed average volume solids %" refers to average of volume solid percentages taking into account that the primer composition and the top-coat composition may not be applied with the same wet film thicknesses. If the primer composition having a VS% of 90 % is applied in a thickness of 200 μm and a top-coat composition having a VS% of 84 % is applied in a thickness of 100 μm, the weighed average volume solids % will be 88 %.

The very low content of VOC renders it possible to establish a fast curing coating system which has a very short "dry-to-handle" time, i.e. preferably a "dry-to-handle" time which is less than 11 hours at 20 °C. In certain preferred embodiments, the "dry-to-handle" time is less than 9 hours at 20 °C, or even less than 7 hours at 20 °C. The "dry-to-handle" time is conveniently determined as described in the Examples section.

The Volatile Organic Compound (VOC) of the coating system is important because VOC emissions influence the environment in a negative way and should therefore be kept to a minimum.

The coatings system of the present invention has very low VOC emission compared to the coatings systems as presented in Table 5. VOC can be determined by various methods e.g. ISO 11890 or EPA method 24.

*First Layer - The Primer Composition*

The first layer of the primer composition comprises an epoxy-based binder system.

The primer composition may further include other constituents as it is described further below. In particular, the primer composition may include anticorrosive constituents and/or fibres.

<u>Epoxy-based binder system</u>

The term "epoxy-based binder system" should be construed as the combination of one or more epoxy resins, one or more curing agents and any reactive epoxy diluents.

The epoxy-based binder system is one of the most important constituents of the primer composition, in particular with respect to the anticorrosive properties.

The epoxy-based binder system comprises one or more epoxy resins selected from aromatic or non-aromatic epoxy resins (e.g. hydrogenated epoxy resins), containing more than one epoxy group per molecule, which is placed internally, terminally, or on a cyclic structure, together with one or more suitable curing agents to act as cross-linking agents. Combinations with reactive diluents from the classes of functional glycidyl ethers or esters of aliphatic, cyclo aliphatic or aromatic compounds can be included in order to reduce viscosity and for improved application and physical properties. The binder system can also include reactive acrylic modifiers such as acrylate monomers and oligomers comprising at least two alpha, beta unsaturated carbonyl groups, reacting with the one or more curing agents via a Michael-type addition reaction.

Suitable epoxy-based binder systems are believed to include epoxy and modified epoxy resins selected from bisphenol A, bisphenol F, Novolac epoxies, non-aromatic hydrogenated epoxies, cyclo aliphatic epoxies, glycidyl esters and epoxy functional acrylics or any combinations hereof.

Examples of suitable commercially available epoxy resins are:

Epikote 828, ex Resolution Performance Products (The Netherlands), bisphenol A type
Araldite GY 250, ex Huntsman Advanced Materials (Switzerland), bisphenol A type
DER 664-20, ex Dow Chemicals (Germany), bisphenol A type
Epikote 1001 X 75, ex Resolution Performance Products (The Netherlands), bisphenol A type
Araldite GZ 7071X75BD, ex Huntsman Advanced Materials (Germany), bisphenol A type
DER 352, ex Dow Chemicals (Germany), mixture of bisphenol A and bisphenol F
Epikote 232, ex Resolution Performance Products (The Netherlands), mixture of bisphenol A and bisphenol F
Epikote 862, ex Resolution Performance Products (The Netherlands), bisphenol F type
DEN 438-X 80, ex Dow Chemical Company (USA), epoxy novolac
Epikote 154, ex Resolution Performance Products (The Netherlands), epoxy novolac
DYD-128, ex Dalian Qihua Chemicals, China, bisphenol A type
Epikote 872-X-75, ex. Hexion (former Resolution performance products, Netherlands), bisphenol A/ epichlorohydrin

resin reacted with dimer fatty acids.

The epoxy-based binder system can comprise one or more reactive epoxy diluents.

Examples of suitable commercially available reactive epoxy diluents are:

Polypox R24, ex Ulf Prummer, Germany, aliphatic monofunctional diglycidylether
Araldite DY-L/BD, ex Huntsmann Advanced Materials, Germany, polyoxypropylene-triglycidylether
Grilonit RV 1812, ex EMS-Primid, Switzerland, hexandiol-diglycidylether
Epodil 757, ex Air products Plc, USA, cyclohexane-dimethanoldiglycidylether
Epilox P 13-20, ex Leuna, Germany, Hexanediol diglycedylether.

The epoxy primer composition can comprise one or more epoxy accelerators.

Examples of suitable commercially available epoxy accelerators are:

Ancamine K 54, ex Air Products Plc, United Kingdom, tris-(dimethylamino methyl) phenol TL 0712, ex Vantico Ltd., Germany, phenol free Mannich base
Hiescat HI-K54, ex Keum Jung, Korea, Tris-(dimethylaminomethyl)phenol.

The epoxy-based binder system comprises one or more curing agents selected from compounds or polymers comprising at least two reactive hydrogen atoms linked to nitrogen.

Suitable curing agents are believed to include amines or amino functional polymers selected from aliphatic amines and polyamines (e.g. cyclo-aliphatic amines and polyamines), polyamido amines, polyoxy alkylene amines (e.g. polyoxy alkylene diamines), aminated polyalkoxy ethers (e.g. those sold commercially as "Jeffamines"), alkylene amines (e.g. alkylene diamines), aralkyl amines, aromatic amines, Mannich bases (e.g. those sold commercially as "phenalkamines"), amino functional silicones or silanes, and including epoxy adducts and derivatives thereof.

Examples of suitable commercially available curing agents are:

Cardolite NC-541, ex Cardanol Chemicals (USA), Mannich base
Cardolite Lite 2001, ex Cardanol Chemicals (USA), Mannich base
Sunmide CX-105X, ex Sanwa Chemical Ind. Co. Ltd. (Singapore), Mannich base
Epikure 3140 Curing Agent, ex Resolution Performance Products (USA), polyamidoamine
SIQ Amin 2030, ex SIQ Kunstharze GmbH (Germany), polyamidoamine
Epikure 3115X-70 Curing Agent, ex Resolution Performance Products (USA), polyamidoamine
SIQ Amin 2015, ex SIQ Kunstharze GmbH (Germany), polyamidoamine
Polypox VH 40309/12, ex Ulf Prümmer Polymer-Chemie GmbH (Germany), polyoxyalkylene amine
Polypox VH 40294, ex Ulf Prümmer Polymer-Chemie GmbH (Germany), Mannich base Ancamine 2609, ex Air Products (UK), Mannich base
Adeka Hardener, ex Adeka Corporation (Japan), Mannich base
CeTePox 1490 H, ex CTP Chemicals and Technologies for Polymers (Germany), polyoxyalkylene amine
Epoxy hardener MXDA, ex Mitsubishi Gas Chemical Company Inc (USA), aralkyl amine Diethylaminopropylamine, ex BASF (Germany), aliphatic amine
Gaskamine 240, ex Mitsubishi Gas Chemical Company Inc (USA),aralkyl amine
Cardolite Lite 2002, ex Cardanol Chemicals (USA), Mannich base
Aradur 42 BD, ex Huntsman Advanced Materials (Germany), cycloaliphatic amine
Isophorondiamin, ex BASF (Germany), cycloaliphatic amine
Epikure 3090 Curing Agent, ex Resolution Performance Products (USA), polyamidoamine adduct with epoxy
Crayamid E260 E90, ex Cray Valley (Italy), polyamidoamine adduct with epoxy
Aradur 943 CH, ex Huntsman Advanced Materials (Switzerland), alkylene amine adduct with epoxy

Preferred epoxy-based binder systems comprises a) one or more epoxy resins selected from bisphenol A, bisphenol F and Novolac; and b) one or more curing agents selected from Mannich Bases, polyamido amines, polyoxy alkylene amines, alkylene amines, aralkyl amines, polyamines, and adducts and derivatives thereof.

Preferably the epoxy resin has an epoxy equivalent weight of 100-2000, such as 100-1500 *e.g.* 150-1000 such as 150-700.

Especially preferred epoxy-based binder systems comprises one or more bisphenol A epoxy resins having an epoxy equivalent weight of 150-700 and one or more polyamine or adducts and derivatives thereof.

Preferred epoxy-based binder systems are ambient curing binder systems.

In the primer composition, the total amount of epoxy-based binder system is in the range of 15-80 %, such as

35-80 %, e.g. 40-75 % by solids volume of the primer composition. In one particularly interesting embodiment, the total amount is in the range of 45-55 % by solids volume.

Without being bound to any particular theory, it is believed that the selection of the ratio between the hydrogen equivalents of the one or more curing agents and the epoxy equivalents of the one or more epoxy resins plays a certain role for the performance of the coating composition.

When used herein, the term "hydrogen equivalents" is intended to cover only reactive hydrogen atoms linked to nitrogen.

The number of "hydrogen equivalents" in relation to the one or more curing agents is the sum of the contribution from each of the one or more curing agents. The contribution from each of the one or more curing agents to the hydrogen equivalents is defined as grams of the curing agent divided by the hydrogen equivalent weight of the curing agent, where the hydrogen equivalent weight of the curing agent is determined as: grams of the curing agent equivalent to 1 mol of active hydrogen. For adducts with epoxy resins the contribution of the reactants before adductation is used for the determination of the number of "hydrogen equivalents" in the complete epoxy-based binder system.

The number of "epoxy equivalents" in relation to the one or more epoxy resins is the sum of the contribution from each of the one or more epoxy resins. The contribution from each of the one or more epoxy resins to the epoxy equivalents is defined as grams of the epoxy resin divided by the epoxy equivalent weight of the epoxy resin, where the epoxy equivalent weight of the epoxy resin is determined as: grams of the epoxy resin equivalent to 1 mol of epoxy groups. For adducts with epoxy resins the contribution of the reactants before adductation is used for the determination of the number of "epoxy equivalents" in the epoxy-based binder system.

Preferably the ratio between the hydrogen equivalents of the one or more curing agents and the epoxy equivalents of the one or more epoxy resins is in the range of 50:100 to 140:100.

Especially preferred epoxy-based binder systems for use in Industrial corrosion protective coatings have a ratio between the hydrogen equivalents of the one or more curing agents and the epoxy equivalents of the one or more epoxy resins in the range of 60:100 to 130:100 such as 80:100 to 120:100, e.g. 90:100 to 110:100.

## Anticorrosive Constituents

The epoxy primer composition may also comprise a particulate material (e.g. a powder) which increases the anticorrosive properties of the coat. Zinc powder or zinc dust, which is well known to incorporate in epoxy primer to produce a zinc epoxy primer, is in this respect of special interest. Zinc powder or zinc dust can all or partly be replaced by a zinc alloy, e.g. as disclosed in WO 2008/125610. Auxiliary corrosion inhibitor, for example a molybdate, phosphate, tungstate or vanadate, ultrafine titanium dioxide, and/or zinc oxide and/or a filler such as silica, calcined clay, alumina silicate, talc, barytes or mica may also be incorporated.

The $D_{50}$ of the particulate material being in the range of 2.5-30 $\mu$m, in particular 2.5-20 $\mu$m. With respect to the particle size, it is preferred that the $D_{50}$ of the particulate material is in the range of 2.5-15 $\mu$m, and preferably in the range of 2.5-12 $\mu$m. Additionally, the $D_{99}$ of the particulate material should preferably be less than 100 $\mu$m. The particle size distribution of the particulate material (e.g. zinc or a zinc alloy) is of major importance in painting applications. For example too coarse particulate materials would result in particles sticking through the dry paint film. Therefore, it is highly preferred to use particulate materials with a $D_{50}$ (mean particle size) of less than 30 $\mu$m, in particular less than 20 $\mu$m. A $D_{50}$ of less than 15 $\mu$m is often more preferred, and less than 12 $\mu$m is even more preferred. The lower limit of the $D_{50}$ is dictated by economic considerations. At a $D_{50}$ of less than 2.5 $\mu$m, a too large fraction of the powder has to be sieved out and recycled for the complete process to run economically.However, other relevant materials include phosphates, aluminum, graphite, carbon black, micaceous iron oxide (MIO), etc.

If present, the amount of the anticorrosive constituent is typically 1-65 % by solids volume of the paint.

In one preferred embodiment, the primer composition comprises 20-35 % by solids volume of zinc, such as 25-30 % by solids volume of zinc.

The anticorrosive filler material may be present as a combination of one or more of the before-mentioned materials.

The anticorrosive constituents, in particular zinc, are preferably present in the form of a particulate material.

The term "particulate material" is intended to cover both fine spherical or somewhat irregularly shaped particles and other shapes such as flakes, disc, spheres, needles, platelets, fibres and rods. A preferred particulate material is a powder.

It is believed that the coating system generally has excellent anticorrosive properties, in particular in the embodiments where zinc is included as described above. Hence, particularly interesting embodiments are those where the rust creep of the dry coating system as determined according to ISO 12944-6 is at the most 1 mm.

When used herein, all amounts stated as % by solids volume of the paint should be understood as % by solids volume of the mixed paint composition ready to be applied, and is based on the constitution of the paint composition. (In contrast hereto, the expression "volume solids %" is determined experimentally.)

Fibres

The primer composition may also comprise fibres. Special fibres with high tensile strength will when incorporated in the epoxy matrix increase the ability to withstand higher mechanical stress. This facilitates the possibility to formulate epoxy coatings with even faster curing and higher cracking resistance at the same time.

Generally, "fibres" is intended to cover any fibres within the groups of natural inorganic fibres, synthetic inorganic fibres, natural organic fibres, synthetic organic fibres, and metallic fibres, or mixtures thereof. Without being bound to any specific theory, it is however presently believed that natural inorganic fibres and synthetic inorganic fibres, in particular mineral fibres of these types, are especially preferred.

It is presently believed that the fibres to be used within the present invention should fulfil certain criteria with respect to dimensions in order to provide the improved properties of a coat of the primer composition. Thus, with respect to average length and average thickness of the fibres which are added to the primer composition during manufacture of the primer composition or mixed with the primer composition before application, such fibres have an average length, of at the most 250 μm and an average thickness of 1-50 μm

Preferred fibres are fibres having an average thickness of 1-25 μm and an average length, of at the most 250 μm, especially an average length of 25-250 μm and an average thickness of 1-25 μm, in particularly an average length of 50-250 μm (such as 50-170 μm) and an average thickness of 2-10 μm. The preferred organic fibres furthermore have a ratio between the average length and the average thickness of at least 2, such as at least 3 e.g. at least 5.

The concentration of the fibres is normally in the range of 2-50 % by solids volume of the dry primer composition (i.e. the composition devoid of the solvents), such as 3-40 % by solids volume of the dry paint. Especially relevant concentrations of fibres, depending upon the type and size of the fibres, may be 4-35 %, such as 5-30 %, such as 6-25 %, such as 7-20 % by solids volume of the dry paint.

It should be understood that the above ranges refer to the total amount of fibres, thus, in the case where two or more fibre types are utilised, the combined amounts should fall within the above ranges.

At present, especially preferred are mineral fibres such as mineral-glass fibres, wollastonite fibres, tobermorite fibres, attapulgite fibres, volcanic rock fibres, bauxite fibres, rockwool fibres, and processed mineral fibres from mineral wool. Examples of commercially available mineral fibres which are believed to improve the mechanical properties according to the invention are (average fibre length in μm ; average fibre thickness in μm):

1. Coatforce CF10, ex Lapinus Fibres BV (The Netherlands), volcanic rock fibre (125;5.5)
2. MS 603 Roxul 1000, ex Lapinus Fibres BV (The Netherlands), volcanic rock fibre (125;5)
3. MS 610 Roxul 1000, ex Lapinus Fibres BV (The Netherlands), (225;5.5)
4. FG 400/060, ex Schwarzwälder Textil-Werke (Germany), E-glass (230;9-14)
5. Nyad G, ex Nyco Minerals (USA), wollastonite (length/diameter ratio 15:1)
6. RCF-160, ex Sumitomo (Japan), C-glass (250;-)
7. Isofrax 1260C High Index, ex Unifrax (United Kingdom) (-;2-3μm)

In a further preferred embodiment, the primer composition comprises:

35-40 % by solids volume of epoxy binder,
13-18 % by solids volume of curing agent,
25-30 % by solids volume of zinc powder,
1-3 % by solids volume of reactive diluents,
5-10 % by solids volume of pigments and fillers, and
6-12 % by solids volume of additives

*Second Layer - The Polyurea-Based Binder System*

The second layer of a top-coat composition comprises a polyurea-based binder system.

Polyurea-Based Binder System

The term "polyurea-binder system" is intended to mean a binder system having as the primary components one or more di- or poly-isocyanate components and one or more di- or polyamine components. It should be understood that the amine component may be either primary or secondary in nature, *i.e.* they may include either one or two hydrogens ($R-NH_2$ or R-NH-R').

Reaction (curing) of the isocyanate component(s) and the amine component(s) results in the formation of a urea-functionality. Reaction of an isocyanate (R-NCO) with a primary amine ($R'-NH_2$) results in an urea-functionality of the formula R-NH-C(=O)-NH-'R, whereas reaction of an isocyanate (R-NCO) with a secondary amine (R'-NH-R") results in an urea-functionality of the formula R-NH-C(=O)-N(R')-R".

In one particularly interesting embodiment, the one or more di- or polyamine components include a secondary amine.

One currently preferred type is the polyurea-based binder system previously described in US 5,126,170. This polyurea coating contains

a) a poly-isocyanate component and

b) an isocyanate-reactive component at least one compound corresponding to the formula (I) below:

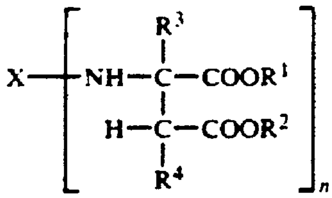

wherein X represents an organic group which has a valence of n and which is inert towards isocyanate groups at temperatures of up to 100 °C;
$R^1$ and $R^2$ each independently is selected from organic groups which are inert towards isocyanate groups at temperatures of up to 100 °C;
$R^3$ and $R^4$ each independently is selected from hydrogen and organic groups which are inert towards isocyanate groups at temperatures of up to 100 °C; and
n is an integer of at least 2.

The cross-linking which takes place is based on an addition reaction between poly-isocyanate component a) and isocyanate-reactive component b), in particular the polyamines containing secondary amino groups, which are also known as "polyaspartic acid derivatives."

Suitable poly-isocyanates for use as poly-isocyanate component a) in the top-coat composition include the known poly-isocyanates of polyurethane chemistry. Examples of suitable low molecular weight poly-isocyanates having a molecular weight of 168 to 300 include hexamethylene diisocyanate, 2,2,4-and/or 2,4,4-trimethyl-1,6-hexamethylene diisocyanate, dodecamethylene diisocyanate, 1,4-diisocyanatocyclohexane, 1-isocyanato-3,3,5-trimethyl-5-isocyanatomethylcyclohexane (IPDI), 2,4'-and/or 4,4'-diisocyanato-dicyclohexyl methane, 2,4-and/or 4,4'-diisocyanato-diphenyl methane and mixtures of these isomers with their higher homologues which are obtained in known manner by the phosgenation of aniline/formaldehyde condensates, 2,4-and/or 2,6-diisocyanatotoluene and any mixtures of these compounds.

It is preferred, however, to use derivatives of these monomeric poly-isocyanates, as is conventional in coatings technology. These derivatives include poly-isocyanates containing biuret groups.

The modified poly-isocyanates are particularly preferred: N,N',N"-tris-(6-isocyanatohexyl)-biuret and mixtures thereof with its higher homologues and N,N',N"-tris-(6-isocyanatohexyl)-isocyanurate and mixtures thereof with its higher homologues containing more than one isocyanurate ring.

Isocyanate group-containing prepolymers and semi-prepolymers based on the monomeric simple or modified poly-isocyanates exemplified above and organic polyhydroxyl compounds are also preferred for use as poly-isocyanate component a). These pre-polymers and semi pre-polymers generally have an isocyanate content of 0.5-30 % by weight, preferably 1-20 % by weight, and are prepared in known manner by the reaction of the above mentioned starting materials at an NCO/OH equivalent ratio of 1.05:1 to 10:1 preferably 1.1:1 to 3:1, this reaction being optionally followed by distillative removal of any un-reacted volatile starting poly-isocyanates still present.

The pre-polymers and semi pre-polymers may suitable be prepared from low molecular weight polyhydroxyl

compounds having a molecular weight of 62 to 299, such as ethylene glycol, propylene glycol, trimethylol propane, 1,6-dihydroxy hexane; low molecular weight, hydroxyl-containing esters of these polyols with dicarboxylic acids of the type exemplified hereinafter; low molecular weight ethoxylation and/or propoxylation products of these polyols; and mixtures of the preceding polyvalent modified or unmodified alcohols.

The pre-polymers and semi pre-polymers are, however, preferably prepared from the known relatively high molecular weight polyhydroxyl compounds of polyurea chemistry which have a molecular weight of 300-8000, preferably 1000-5000, as determined from the functionality and the OH number. These polyhydroxyl compounds have at least two hydroxyl groups per molecule and generally have a hydroxyl group content of 0.5-17 % by weight, preferably 1-5 % by weight.

Examples of suitable relatively high molecular weight polyhydroxyl compounds which may be used for the preparation of the pre-polymers and semi pre-polymers include the polyester polyols based on the previously described low molecular weight, monomeric alcohols and polybasic carboxylic acids such as adipic acid, sebacic acid, phthalic acid, isophthalic acid, tetrahydrophthalic acid, hexadydrophthalic acid, maleic acid, the anhydrides of these acids and mixtures of these acids and/or acid anhydrides. Hydroxyl group-containing polylactones, especially poly-ε-caprolactones, are also suitable for the preparation of the pre-polymers and semi pre-polymers.

Polyether polyols, which are obtained in known manner by the alkoxylation of suitable starting molecules, are also suitable for the preparation of the isocyanate group-containing pre-polymers and semi pre-polymers. Examples of suitable starting molecules for the polyether polyols include the previously described monomeric polyols, water, organic polyamines having at least two NH bonds and any mixtures of these starting molecules. Ethylene oxide and/or polylene oxide are particularly suitable alkylene oxides for the alkoxylation reaction. These alkylene oxides may be introduced into the alkoxylation reaction in any sequence or as a mixture.

Also suitable for the preparation of the pre-polymers and semi pre-polymers are the hydroxyl group-containing polycarbonates which may be prepared by the reaction of the previously described monomeric diols with phosgene and diaryl carbonates such as diphenyl carbonate. It is found that the selection of constituents of polyurea top-coat primer renders it possible to completely eliminate the need for tin-based catalyst. Hence, in particular embodiments of the invention, the polyurea top-coat primer is free of any tin-based catalyst.

Examples of suitable commercially available poly-isocyanate resins are:

Desmodur N3900 (formerly VP2410), ex Bayer (Germany), aliphatic polyisocyanate
Desmodur N3600, ex Bayer (Germany), aliphatic polyisocyanate
Desmodur N3800, ex Bayer (Germany), aliphatic polyisocyanate
Tolonate HDT-LV2, ex Rhodia (France), aliphatic polyisocyanate
Desmodur N3390, ex Bayer (Germany), aliphatic polyisocyanate
Tolonate HDT90, ex Rhodia (France), aliphatic polyisocyanate
Basonat HI 190 B/S, ex BASF (Germany), aliphatic polyisocyanate
Desmodur N75, ex Bayer (Germany), aliphatic polyisocyanate
Bayhydur VP LS 2319, ex Bayer (Germany), aliphatic polyisocyanate
Tolonate IDT 70B, ex Rhodia (France), aliphatic polyisocyanate

Component b) is based in whole or in part on compounds corresponding to formula 1 wherein $R^1$ to $R^4$ and n have the meanings previously set forth. It is particularly preferred to use "poly aspartic acid derivatives" corresponding to the above formula wherein X represents a divalent hydrocarbon group obtained by the removal of the amino groups from 1,4-diaminobutane, 1,6-diaminohexane, 2,2,4- and 2,4,4-trimethyl-1,6-diaminohexane, 1-amino-3,3,5-trimethyl-5-aminomethyl-cyclohexane, 4,4'-diamino-dicyclohexyl methane or 3,3-dimentyl-4,4'-diamino-dicyclohexyl methane, and n is 2.

The preferred starting components b) also include those compounds corresponding to formula (I) wherein $R^1$ and $R^2$ represent for methyl or ethyl groups and $R^3$ and $R^4$ represent hydrogen.

Suitable polyamines include ethylene diamine, 1,2-diaminopropane, 1,4-diaminobutane, 1,6-diaminohexane, 2,5-diamino-2,5-dimethylhexane, 2,2,4-and/or 2,4,4-trimethyl-1,6-diaminohexane, 1,11-diaminoundecane, 1,12-diaminododecane, 1-amino-3,3,5-trimethyl-5-aminomethyl-cyclohexane, 2,4-and/or 2,6-hexahydrotoluylene diamine, 2,4'-and/or 4,4'-diamino-dicyclohexyl methane and 3,3'-dimethyl-4,4'-diamino-dicyclohexyl methane. Aromatic polyamines such as 2,4-and/or 2,6-diaminotoluene and 2,4'-and/or 4,4'-diaminodiphenyl methane are also suitable but less preferred. Relatively high molecular weight polyether polyamines containing aliphatically bound primary amino groups, for example, the products marketed under the Jeffamine trademark, are also suitable. Examples of optionally substituted maleic or fumaric acid esters suitable for use in the preparation of the compounds corresponding for formula (I) include dimethyl, diethyl and din-butyl esters of maleic acid and fumaric acid and the corresponding maleic or fumaric acid esters substituted by methyl in the 2- and/or 3-position.

The preparation of the "poly aspartic acid derivatives" corresponding to Formula (I) from the above mentioned

starting materials may be carried out, for example, at a temperature of 0 °C to 100 °C, using the starting materials in such proportions that at least 1, preferably 1, olefinic double bond is present for each primary amino group. Excess starting materials may be removed by distillation after the reaction. The reaction may be carried out solvent-free or in the presence of suitable solvents such as methanol, ethanol, propanol, dioxane and mixtures of such solvents. The binders present in the coating compositions according to the invention are preferably based on mixtures of poly-isocyanate component a) with the secondary polyamines corresponding to Formula (I) or mixtures of poly-isocyanate component a) with the secondary polyamines corresponding to Formula (I) and other isocyanate-reactive compounds.

These other optionally used isocyanate-reactive compounds are preferably organic polyhydroxyl compounds known from polyurethane chemistry and include both the low molecular weight polyhydroxyl compounds and the relatively high molecular weight polyhydroxyl compounds previously set forth for the preparation of the pre-polymers and semi pre-polymers suitable for use as poly-isocyanate component a).

Particularly preferred isocyanate-reactive compounds which may be used as a portion of component b) are the hydroxy functional poly acrylates known for use in polyurethane coatings. These compounds are hydroxyl-containing copolymers of olefinically unsaturated compounds having a number average molecular weight (Mn) determined by vapour pressure or membrane osmometry of 800-50,000, preferably 1000-20,000 and more preferably 5000-10,000, and having a hydroxyl group content of 0.1-12 % by weight, preferably 1-10 % by weight and most preferably 2-6 % by weight. The copolymers are based on olefinic monomers containing hydroxyl groups and olefinic monomers which are free from hydroxyl groups. Examples of suitable monomers include vinyl and vinylidene monomers such as styrene, α-methyl styrene, o- and p-chloro styrene, o-, m- and p-methyl styrene, p-tert.-butyl styrene; acrylic acid; (methy)acrylonitrile; acrylic and methacrylic acid esters of alcohols containing 1 to 8 carbon atoms such as ethyl acrylate, methyl acrylate, n- and isopropyl acrylate, n-butyl acrylate, 2-ethylhexyl acrylate, 2-ethylhexyl methacrylate, iso-octyl acrylate, methyl methacrylate, ethyl methacrylate, butyl methacrylate and iso-octyl methacrylate; diesters of fumaric acid, itaconic acid or maleic acid having 4 to 8 carbon atoms in the alcohol component; (methy)acrylic acid amide; vinyl esters of alkane monocarboxylic acids having 2 to 5 carbon atoms such as vinyl acetate or vinyl propionate; and hydroxyalkyl esters of acrylic acid or methacrylic acid having 2 to 4 carbon atoms in the hydroxyalkyl group such as 2-hydroxyethyl-, 2, hydroxypropyl-, 4-hydroxybutyl-acrylate and methacrylate and trimethylol propane-mono- or pentaerythritomono-acrylate or methyacrylate. Mixtures of the monomers exemplified above may also be used for the preparation of the hydroxy functional poly acrylates.

Mixtures of the polyhydroxyl compounds previously described may be used as a portion of component b).

In the binders used according to the invention, components a) and b) are used in amounts sufficient to provide an equivalent ratio of isocyanate groups to isocyanate-reactive groups of 0.8:1 to 20:1, preferably 0.8:1 to 2:1, more preferably 0.8:1 to 1.5:1, even more preferably 0.8:1 to 1.2:1 and most preferably about 1:1. The optional poly hydroxyl compound is present in component b) in an amount such that up to 20 hydroxyl groups are present for each secondary amino group from the compounds corresponding to formula (I), preferably the equivalent ratio of hydroxyl groups to secondary amino groups is 10:1 to 1:10.

Examples of suitable commercially available isocyanate-reactive resins are:

Desmophen NH 1220, ex Bayer (Germany), Poly aspartic based polyurea binder
Desmophen NH 1420, ex Bayer (Germany), Poly aspartic based polyurea binder
Desmophen NH 1520, ex Bayer (Germany), Poly aspartic based polyurea binder

*Other Constituents of the Primer and Top-Coat Compositions*

Each of the primer composition and the top-coat compositions may further comprise other paint constituents as will be apparent for the person skilled in the art. Examples of such paint constituents are solvents, pigments, fillers, additives (*e.g.* thickening agents, wetting agents, suspending agents, anti-sag agents, anti-sediment agents, stabilizers, coalescing agents, and thixothropic agents).

The compositions typically comprise a solvent or solvents. Examples of solvents are alcohols such as water, methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 1-methoxy-2-propanol, 2-butoxyethanol and butyl diglycol; esters such as methoxypropyl acetate, n-butyl acetate and 2-ethoxyethyl acetate; and mixtures thereof.

Typical examples of solvents useful for the epoxy primer composition are alcohols such as water, methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 1-methoxy-2-propanol, 2-butoxyethanol and butyl diglycol; esters

such as methoxypropyl acetate, n-butyl acetate and 2-ethoxyethyl acetate; and mixtures thereof.

Typical examples of solvents useful for the top-coat composition are aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; esters such as methoxypropyl acetate, n-butyl acetate and 2-ethoxyethyl acetate; and mixtures thereof.

*Preparation of the Primer and Top-Coat Compositions*

The primer composition and the top-coat composition may be prepared by any suitable technique that is commonly used within the field of paint production. Thus, the various constituents may be mixed together using a high speed disperser, a ball mill, a pearl mill, a three-roll mill etc. The paints according to the invention may be filtered using bag filters, patron filters, wire gap filters, wedge wire filters, metal edge filters, EGLM turnoclean filters (ex Cuno), DELTA strain filters (ex Cuno), and Jenag Strainer filters (ex Jenag), or by vibration filtration.

The primer and top-coat compositions to be used herein are conveniently prepared by mixing two or more components *e.g.* two pre-mixtures. It should be understood that when reference is made to the paint composition, it is the mixed paint composition ready to be applied.

As an example, the epoxy primer base component and the curing agent component for the epoxy primer composition are mixed (*e.g.* in a ratio of approx. 3:1 by volume) by adding the curing agent to the base and stir well until the mixture is homogeneous. The mixture is immediately ready for application, *e.g.* by spray application.

As an example, the polyurea top-coat base component and the curing agent for the polyurea top-coat composition are mixed (*e.g.* in a ratio of approx. 3:1 by volume) by adding the curing agent to the base and stir well until the mixture is homogeneous. The mixture is then immediately ready for application, *e.g.* by spray application.

*Application of the Primer and Top-Coat Compositions*

The primer composition and the top-coat composition can be applied to a substrate (in particular a steel structure) by well known standard application methods like conventional air-spraying or by airless- or airmix-spraying equipment (or alternatively by means of a brush or a roller, in particular when used as a stripe coat). Due to the relatively short pot life of the coating systems of the present invention, two-component spray systems with automatic measure of the mixing ratio are preferred.

*Film Thickness*

The coating system is typically applied in a total dry film thickness of 120-400 μm, such as 150-350 μm.

In contrast to many of the available coating systems, it is typically preferred that the dry film thickness of the first layer (the primer) is higher that the dry film thickness of the second layer (the top-coat).

This being said, it is preferred that the dry film thickness of the first layer is at least 100 μm.

In one embodiment which is particularly applicable for, *e.g.*, inner structures, the coating system is selected such that:

(i) the dry film thickness of the first layer is 80-160 μm, such as 100-140 μm ; and

(ii) the dry film thickness of the second layer is 40-120 μm, such as 60-100 μm.

In another embodiment which is particularly applicable for, *e.g.*, windmill towers, the coating system is selected such that:

(i) the dry film thickness of the first layer is 100-180 μm, such as 120-160 μm; and
(ii) the dry film thickness of the second layer is 60-140 μm, such as 80-120 μm.

In still another embodiment which is particularly applicable for, *e.g.*, offshore purposes, the coating system is selected such that:

(i) the dry film thickness of the first layer is 160-240 μm, such as 180-220 μm; and

(ii) the dry film thickness of the second layer is 80-160 μm, such as 100-140 μm.

*Alternative Coating System*

An alternative to the coating system described above is the one consisting of:

(i) a first layer of a primer composition comprising an epoxy-based binder system, said primer composition having a volume solids % of at least 86 %; and

(ii) a second layer of top-coat composition comprising a polyurea-based binder system, said top-coat composition having a volume solids % of at least 78 %;

wherein the weighted average volume solids % of the coating system is at least 82 %, such as at least 83 % or at least 84 %.

Except for the volume solids % of the primer composition and the volume solids % of the top-coat composition, the coating system follows the directions, embodiments, and variants described for the coating system described further above (*mutatis mutandis*), including the details in the sections "The Coating System", "High Volume Solids Percentage", "First Layer - The Primer Composition", "Second Layer - The Polyurea-Based Binder System", "Other Constituents of the Primer and Top-Coat Compositions", "Preparation of the Primer and Top-Coat Compositions", "Application of the Primer and Top-Coat Compositions", and "Film Thickness".

In fact, the primer composition has a volume solids % of at least 86 %, such as at least 87 %, e.g. at least 88 %. Similarly, the top-coat composition has a volume solids % of at least 78 %, such as at least 79 %, e.g. at least 80 %.

This being said, and most importantly, the weighed average volume solids % of the coating system is at least 82 %, such as at least 83 %, e.g. at least 84 %.

*Preferred Embodiment*

In view of the preliminary results, the invention in particular provides a coating system suitable for aggressive corrosive environments, consisting of:

(i) a first layer of a zinc primer composition comprising an epoxy-based binder system and 25-30 % by solids volume of the primer composition of zinc, said primer composition having a volume solids % of at least 82 %; and

(ii) a second layer of top-coat composition comprising a polyurea-based binder system, said top-coat composition having a volume solids % of at least 82 %, and said binder system comprising an isocyanate-reactive component of the formula (I):

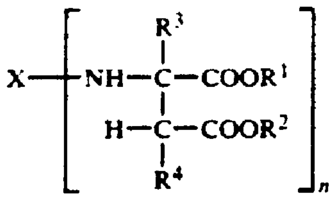

wherein X represents an organic group which has a valence of n and which is inert towards isocyanate groups at temperatures of up to 100 °C;

$R^1$ and $R^2$ each independently is selected from organic groups which are inert towards isocyanate groups at temperatures of up to 100 °C;

$R^3$ and $R^4$ each independently is selected from hydrogen and organic groups which are inert towards isocyanate groups at temperatures of up to 100 °C; and

n is an integer of at least 2;

wherein the weighed average volume solids % of the coating system is at least 84 %; and

wherein the dry film thickness of the first layer is higher than the dry film thickness of the second layer, said first layer having a dry film thickness of at least 100 μm.

According to the alternative coating system described above, the invention further provides a coating system suitable for aggressive corrosive environments, consisting of:

(i) a first layer of a zinc primer composition comprising an epoxy-based binder system and 25-30 % by solids volume of the primer composition of zinc, said primer composition having a volume solids % of at least 86 %; and

(ii) a second layer of top-coat composition comprising a polyurea-based binder system, said top-coat composition having a volume solids % of at least 78 %, and said binder system comprising an isocyanate-reactive component of the formula (I):

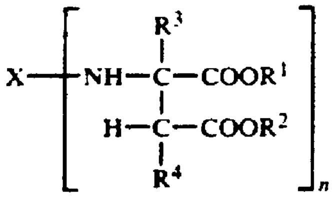

wherein X represents an organic group which has a valence of n and which is inert towards isocyanate groups at temperatures of up to 100 °C;
$R^1$ and $R^2$ each independently is selected from organic groups which are inert towards isocyanate groups at temperatures of up to 100 °C;
$R^3$ and $R^4$ each independently is selected from hydrogen and organic groups which are inert towards isocyanate groups at temperatures of up to 100 °C; and
n is an integer of at least 2;
wherein the weighed average volume solids % of the coating system is at least 82 %, such as at least 83 %, or at least 84 %; and
wherein the dry film thickness of the first layer is higher than the dry film thickness of the second layer, said first layer having a dry film thickness of at least 100 μm.

In particularly interesting embodiments of the above coating systems, the "dry-to-handle" time of the whole coating system is less than 11 hours, such as less than 9 hours, in particular less than 7 hours, at 20 °C.

In further interesting embodiments hereof, the rust creep of the dry coating system as determined according to ISO 12944-6 is at the most 1 mm.

*Coated Structure*

The present invention further relates to a coated structure carrying on at least a part of the surface thereof a coating system as described above in dry form.

Such a structure is typically a steel or iron structure, in particular steel. Interesting examples hereof are structures such as off-shore platforms, windmill towers, steel chimneys, power stations, steel bridges, cranes, rail cars, containers, wind turbines, etc. in costal, off-shore, or industrial environments, but also tidal zone areas where fast salt water resistance is required. Of particular interest are windmill towers.

*A Method for the Establishment of a Coated Structure*

The present invention also relates to a method for the establishment of a coated structure using a coating system consisting of a primer composition and a top-coat composition, said primer composition comprising an epoxy-based binder system and said a top-coat composition comprising a polyurea-based binder system, said method comprising:

(i) applying the primer composition onto a predetermined part of the surface of the structure thereby forming a curable primer film on said surface,

(ii) allowing said curable primer film to at least partially cure thereby forming an epoxy primer coat,

(iii) applying the top-coat composition onto the epoxy primer coat thereby forming a curable top-coat film on said epoxy primer coat, and

(iv) allowing said curable top-coat film to cure, and if necessary allowing said epoxy primer coat to fully cure, thereby forming a cured coating system consisting of the epoxy primer coat and a polyurea top-coat;

wherein said primer composition has a volume solids % of at least 82 %, said top-coat composition having a volume solids % of at least 82 %; and the weighted average volume solids % of the coating system being at least 84 %, or wherein said primer composition has a volume solids % of at least 86 %, said top-coat composition having a volume

solids % of at least 78 %; and the weighted average volume solids % of the coating system being at least 82 %.

In a particularly interesting embodiment, the primer composition comprises 20-35 % by solids volume of zinc, such as 25-30 % by solids volume of zinc.

Otherwise, the method of the invention can be further specified in accordance with the details disclosed above in relation to the coating system, the preferred embodiment, the coated structure, etc. 3 In one embodiment the

*Primer Compositions*

In one embodiment the zinc epoxy primer composition comprises an epoxy-based binder system and 20-40 % by solids volume of the primer composition of zinc; said primer composition having a volume solids % of at least 82 %, such as at least 84 %, or at least 86%. In preferred embodiments hereof, the epoxy-based binder system comprises a curing agent selected from Mannich bases, aliphatic polyamines and modified aliphatic polyamines. In specially preferred embodiments hereof, the epoxy-based binder system comprises a curing agent selected from Mannich bases.

Preferably, the "dry-to-handle" time of the zinc epoxy primer composition is less than 5 hours, such as less than 4 hours, in particular less than 3 hours, at 20 °C.

Also preferably, the "dry-to-walk-on" time of the zinc epoxy primer composition is less than 5 hours, such as less than 4 hours, in particular less than 3 hours, at 20 °C.

In a further preferred embodiment, said curing agent is at least partly further reacted with a glycidyl ether functional reactive diluent.

epoxy primer composition comprises an epoxy-based binder system; said primer composition having a volume solids % of at least 82 %, such as at least 84 %, or at least 86%; and a "dry-to-handle" time which is less than 5 hours, such as less than 4 hours, in particular less than 3 hours, at 20 °C.

epoxy primer composition comprises an epoxy-based binder system; said primer composition having a volume solids % of at least 82 %, such as at least 84 %, or at least 86%; and a "dry-to-walk-on" time which is less than 5 hours, such as less than 4 hours, in particular less than 3 hours, at 20 °C.

For a further specification of the zinc epoxy primer composition and the epoxy primer composition, see further above.

EXAMPLES

*Materials*

Commercial paint systems used in examples

HEMPADUR ZINC 17320 (ex Hempel A/S) is a two-component zinc rich epoxy paint. It cures to a strong and corrosion resistant coating. Recommended use: As a primer on steel in medium to severely corrosive environment or for on-line application on containers. Volume solids %: 61.

HEMPADUR 47140 (ex Hempel A/S) is a two-component polyamide adduct cured, high build epoxy paint which combines a relatively high volume solids content with a short drying time. Recommended use: As a primer in mild to medium atmospheric environments or as an intermediate or finishing coat in epoxy systems in medium to severely corrosive atmospheric environment or as a finishing coat where the usual outdoor cosmetic appearance of epoxy paints is acceptable. Volume solids %: 70.

HEMPATHANE TOPCOAT 55210 (ex Hempel A/S) is a two-component, semi-gloss acrylic polyurethane coating, cured with aliphatic isocyanate, with good gloss and color retention. Recommended use: As a finishing coat for protection of structural steel in severely corrosive atmospheric environment, where light-fastness and gloss retention are required. Volume solids %: 51.

PERMATEX NCG BASE COAT (ex Sika GmbH) is a two-component fast drying low solvent epoxy primer. Recommended use: As a long lasting corrosion protection for wind turbines. Volume solids %: 81.

PERMACOR 2230 VHS (ex Sika GmbH) is a two-component low solvent fast drying acrylpolyurethane topcoat. Recommended use: As a long lasting weather resistant coat for corrosive environment. Volume solids %: 70.

INTERZINC 52 (ex International) is a two-component, metallic zinc rich epoxy primer. Recommended use: As a high performance primer for aggressive environments. Volume solids %: 59.

INTERCURE 99 (ex International) is a two-component DTM primer finish polyurethane coating. Recommended use: As a Direct to Metal (DTM) finish coat for mild to medium corrosive environments or as top-coat on a zinc epoxy primer for severe corrosive environments. Volume solids %: 80.

Composition of the Primers and Top-coats

Table 1: Composition of Primer A (parts by weight)

| | Primer A |
|---|---|
| **Component 1: Epoxy primer base** | **214.6** |
| **Binder** | **36.0** |
| Bisphenol A-Diglycidylether epoxy binder *Dyo 128*, ex Dilian Qihua Chemicals China | 36.0 |
| | |
| **Additives** | **8.4** |
| Defoamers, wetting agents, rheological additives, plasticizers, adhesion promoters, etc. | 8.4 |
| | |
| **Solvents** | **10.9** |
| Xylene | 6.3 |
| Butyl alcohol | 2.7 |
| Benzyl alcohol | 1.9 |
| | |
| **Pigments** | **159.3** |
| Zinc powder *Zinc Metal pigment 4P32,* ex Umicore Belqium | 153.0 |
| Aluminum pigment *CB 105 in WS/HA,* ex Carlfors Bruk Sweden | 6.3 |
| | |
| | |
| **Component 2: Curing agent for epoxy primer base** | **33.3** |
| | |
| **Epoxy adduct intermediate** | **14.7** |
| Curing agent of Mannich base and modified aliphatic polyamine *Ancamine 2609,* ex Air Products UK | 12.9 |
| Hexanediol diglycidylether binder *Epilox P 13-20,* ex Leuna Germany | 1.3 |
| Tris-(dimethylaminomethyl) phenol epoxy accelerator *Hiescat HI-54K,* ex Keum Jung Korea | 0.5 |
| | |
| **Additives** | **2.1** |
| Defoamers, rheological additives, adhesion promoters, etc. | 2.1 |
| | |
| **Solvents** | **3.3** |
| Xylene | 3.3 |
| | |
| **Fillers and pigments** | **13.2** |
| Red iron oxide *Bayferrox Red 4130,* ex lanxess Shanqhai Pigments China | 3.2 |
| Calcium carbonate extender *Zetafil CST 2,* ex Mikrofill k Zafranas Greece | 10.0 |
| | |
| **Volume solids % (determined as described herein)** | **87 %** |

Table 2: Composition of Top-coats 1-3 (parts by weight)

| | Top-coat 1 | Top-coat 2 | Top-coat 3# |
|---|---|---|---|
| **Component 1: Polyurea top coat base** | **131.5** | **129.4** | **129.3** |
| | | | |
| **Binder** | **40.0** | **39.0** | **33.3** |
| Polyaspartic acid ester *Desmophen NH 1420,* ex Bayer AG USA | 40.0 | 39.0 | 33.3 |
| | | | |
| **Additives:** | **7.5** | **7.9** | **9.7** |
| Water scavengers, rheological additives, wetting agents, matting agents, light stabilizers, adhesion promoters, thickening agents, defoamers, wetting agents, adhesion promoters, plasticizers, antisag, antisediments agents, etc. | 7.5 | 7.9 | 9.7 |
| | | | |
| **Solvents** | **14.0** | **16.1** | **25.9** |
| Butyl acetate | 7.0 | 3.6 | 6.7 |
| Methoxy propyl acetate | | 4.6 | 8.0 |
| Xylene | 7.0 | 4.2 | 5.7 |
| Aromatic hydrocarbon, medium boiling | | 3.7 | 5.5 |
| | | | |
| **Fillers and pigments** | **70.0** | **66.4** | **60.4** |
| Titanium dioxide *Tioxide TR81,* ex Huntsmann UK | 50.0 | 11.0 | 10.0 |
| Carbon black *Special Black 100,* ex. Evonik Dequssa, Germany | | 0.1 | 0.1 |
| Iron oxide yellow *Bayferrox 920, ex.* Lanxess, Germany | | 0.3 | 0.3 |
| Barium sulphate extender *Microbarite EB,* ex Carban Portuqal | 20.0 | 55.0 | 50.0 |
| | | | |
| | | | |
| **Component 2: Curing agent for polyurea top coat base** | **28.3** | **28.3** | **22.6** |
| Aliphatic poly isocyanate *Tolonate HDT-LV2,* ex Rhodia France | 28.3 | 28.3 | 22.6 |
| | | | |
| **Volume solids (determined as defined herein)** | **88 %** | **85 %** | **79 %** |
| # Top-coat 3 is a top-coat pertaining to the "Alternative Coating System" described herein. | | | |

*Preparation of the Paint Compositions*

Manufacturing of Epoxy Primer Base

Add binder, defoamer, wetting agent, and rheological additive under agitation. Grind for 10 min. Add xylene, zinc dust, and aluminum pigment while stirring. Grind to max. 50 μm. Cool the mill base with butanol, plasticizer, and benzyl alcohol. Add adhesion promoter when the temperature is below 50 °C. Adjust viscosity with xylene.

Manufacturing of Epoxy Primer Curing Agent

Charge curing agent: Mannich base, modified aliphatic polyamine. Mix and add under agitation the epoxy binder and leave it for 24 hours. Add epoxy accelerator. Mix approx. 50 % of the adduct with defoamer, rheological

additive, pigment and extender. Grind to 50 μm, temperature minimum 50 °C. Add the rest of the adduct. Add xylene and stir well. Add adhesion promoter and mix.

Preparation of the Primer Composition

The epoxy primer base component and the curing agent component for the epoxy primer is mixed in ratio 3:1 by volume by adding the curing agent to the base and stir well until the mixture is homogeneous. The mixture is immediately ready for application.

Manufacturing of Polyurea Top-Coat Base

Charge binder Mix and add under agitation water scavenger, rheological additive I, wetting agent, pigment, extender, and matting agent. Grind to 40 μm. Add light stabilizer, rheological additive II under high speed. Add butyl acetate and adhesion promoter. Adjust viscosity with xylene.

Manufacturing of Polyurea Top-Coat Curing Agent

The curing agent consists only of the binder component.

Preparation of the Polyurea Top-Coat Composition

The polyurea top coat base component and the curing agent for the polyurea top coat is mixed in ratio 3:1 by volume by adding the curing agent to the base and stir well until the mixture is homogeneous. The mixture is immediately ready for application.

Application Procedure

The coatings of the present invention can be applied by well known standard application methods like conventional air spraying or by air-less or air-mix spraying equipment. Due to the relatively short pot life of the coating systems of the present invention, two-component spray systems with automatic measure of the mixing ratio are preferred.

*Test Methods*

Determination of Volume solids %

Volume solids % (VS%) is determined according to ISO 3233 with the modification that drying is carried out at 23 °C and 50 % relative humidity for 7 days.
Ten test items (i.e. ten-fold repetition) are prepared.
The Volume Solids (VS) figure expresses in percentage the ratio:

(Dry film thickness measured after 7 days) / (Wet film thickness measured immediately after application) x 100%.

Volume solids are usually slightly higher than the theoretical value (referred to as "solids volume"), which is found by a calculation based on the paint composition taking specific gravity and solid content of each individual raw material into consideration. Volume solids take into account that small amounts of solvents are usually retained, and that air may be entrapped in the dry paint film either in the form of vacuoles or as interstices. Volume solids are in general in better agreement with practical measurements of dry film thickness than the theoretical value.

Determination of "dry-to-handle" time

The test method is used for determining the "dry-to-handle" time. The freshly painted panels (DFT typically 120-400 μm) are applied a pressure of 100 $kg/cm^2$ for 3 minutes after the application of the outermost paint coat. This pressure is applied in order to simulate the pressure applied by tools and equipment used when handling and transporting the coated object. A Teflon-coated steel block (base area 3.14 $cm^2$) was pressed towards the painted surface by means of a pneumatic compression machine with a mobile arm. If the paint is not "dry-to-handle", the paint will ooze out from underneath the pressure block resulting in a visible indentation mark.

The appearance of the painted surface, resulting from the pressure applied, is rated on a scale from 1 to 5, where 1 is unsatisfactory and 5 is perfect with no visible mark after testing. Any rating of 3 or above is termed "acceptable". The pressure is applied at intervals of 1 hour after application of the outermost paint coat (starting a full number of hours after application when the panel was considered ready for testing) (a new panel for each test) and until a rating of 5 is obtained, or until no more panels are available.
The definition of "dry-to-handle" according to this test is the time after application of the outermost coat required in order to obtain a rating of 5. After this period of time, the paint surface is sufficiently hardened to be handled with care without coming off/being damaged.

Determination of the "dry-to-walk-on" time

The "dry-to-walk-on" time is determined essentially as the dry-to-handle time, however using a pressure of 5 $kg/cm^2$. This pressure is applied in order to simulate the pressure applied by the shoes or boots of a person walking on the surface coated with the primer composition.
Hence, the freshly painted panels (DFT typically 50-150 $\mu$m) are applied a pressure of 5 $kg/cm^2$ for 3 minutes after the application of the primer layer. A Teflon-coated steel block (base area 25 $cm^2$) was pressed towards the painted surface by means of a pneumatic compression machine with a mobile arm. If the paint is not "dry-to-walk-on", the paint will ooze out from underneath the pressure block resulting in visible indentation marks.
The appearance of the painted surface, resulting from the pressure applied, is rated on a scale from 0 to 5, where 1 is unsatisfactory and 5 is perfect with no visible mark after testing. The pressure is applied at intervals of 1 hour after application of the primer (starting a full number of hours after application when the panel was considered ready for testing) (a new panel for each test) and until a rating of 5 is obtained, or until no more panels are available.
The definition of "dry-to-walk-on" according to this test is the time after application of the outermost coat required in order to obtain a rating of 5. After this period of time, the paint surface is sufficiently hardened to be walked on without coming off/being damaged.

Corrosion Test - Method I

a) Salt Spray Test (SST) - Method I

Salt spray test according to ASTM B 117 (ISO 9227 (formerly ISO 7253)). Test for evaluation of corrosion resistance in salt spray or reproducing corrosion that occurs in atmosphere containing salt spray or splash. Constant spray with 5 % NaCl solution at 35 °C. When the test is stopped, blisters and rust are evaluated according to ASTM D 714 (ISO 4628-2) and ASTM D 610 (ISO 4628-3), respectively. Adhesion is evaluated according to X-cut method according to ASTM D 3359, method A (see below).

b) Adhesion Test (ADH) - Method I

Adhesion test is used to evaluate the adhesion of a paint system to the substrate and between coats (layers).
X-cut according to ASTM D 3359, method A. An "X" is cut into the film to the substrate, pressure tape (TESAPACK 4287) is applied over the "X" and then removed, and adhesion is evaluated by comparison with descriptions and pictures. The method is used to establish whether the adhesion of the coating to the substrate may occur between the coats (adhesive break) or in the coating (cohesive break). The type of rupture is reported, and the severity is judged on a scale from 5 (perfect) to 0 (poor).

Corrosion Test - Method II

The coating systems were evaluated according corrosion category C5-M, high, cf. ISO 12944-6. The overall evaluation was rated either "Pass" or "Fail" in accordance with the ISO 12944 standard.
Panel dimension is 70x150x5 mm, with a surface roughness (profile) similar to ISO 8503-1 medium (G).
The evaluation consisted of the following tests a)-c):

a) ADH - Reference panels

A set of three reference panels were prepared for each system in order to evaluate the adhesion on unexposed panels according to ISO 4624, pull-off test.

b) BBT - Blister Box Test

The Blister Box Test was conducted according to ISO 6270-1. This method was performed in order to evaluate the water resistance of a coating system using controlled condensation. Three panels were used for each test.

The panel surface with the coating system were exposed to 40°C, saturated water vapour, at an angle of 15° to the horizontal. The reverse side of the panel was exposed to room temperature. After ending of the exposure (720 hours), blistering and rust were evaluated according to ISO 4628-2 and ISO 4628-3, respectively. Cracking was evaluated according to ISO 4628-4. Adhesion was evaluated according to ISO 4624 (pull-off tests). The actual adhesion test was performed 48 hours after the end of the exposure.

c) SST - Salt Spray Test - Method II

The Salt Spray Test was conducted according to ISO 9227. This method was performed in order to evaluate the corrosion resistance of a coating system by reproducing the corrosion that occurs in an atmosphere containing salt spray or splash. Six panels were used for each test.

The operation conditions of the salt spray test were constant spray with 5% NaCl solution at 35°C. After ending of the exposure (1440 hours), blistering and rust were evaluated on both panel and around the score (in mm from centre), according to ISO 4628-2 and ISO 4628-3, respectively. Cracking was evaluated according to ISO 4628-4. Adhesion was evaluated according to ISO 4624 (pull-off tests). At score the paint film was removed, and the width of the rusting was measured at nine points, where from the M-max and M-avg. values were calculated. The actual adhesion test is performed 48 hours after the end of the exposure.

*Results*

Corrosion Test - Method I

A coated panel was exposed to the Salt Spray Test and was exposed for 2171 hours. Subsequently, the panel was evaluated in accordance with the test details.

**Table 3: Corrosion Test - Method I (exposure 2171 hours)**

| System 1. coat/2. coat | Recoating interval (days) | DFT (μm) | Blistering | Rust creep (mm) | Adhesion |
|---|---|---|---|---|---|
| Permatex NCG Base Coat/ Permacor 2230 VHS | 1 | 403 | None | Not evaluated | 5 |
| Model paint: Primer A/ Top-coat 1 | 1 | 317 | None | <1 | 5 |

Both tested systems showed excellent performance blistering and perfect adhesion after a very aggressive anticorrosive test. The coating system according to the invention further showed only minimal rust creep (<1 mm).

Dry-to-handle time

**Table 4: Dry-to-handle time**

| System 1. coat/2. coat | DFT (μm) | Hours after last application | Pressure ($kg/cm^2$) | Time of pressure | Evaluation |
|---|---|---|---|---|---|
| Primer A/Top-coat 1 | 277 | 3 | 100 | 3 minutes | 5 |

The results from the "dry-to-handle" time test show that the coating system of Primer A and Top-coat 1 has superior dry-to-handle time, as a pressure of 100 $kg/cm^2$ leaves no visible mark after indentation (rated 5).

Process time/VOC

| Table 5: Process time and VOC values (240 µm systems) | | | | | |
|---|---|---|---|---|---|
| System 1. coat/2. coat/3. coat (if any) | DFT (µm) | xProcess time in paint shop (hours) | Volume solids % | VOC for coat (g/L) | #Total VOC for whole system ($g/m^2$) |
| Hempadur zinc 17320 | 50 | | 61 | 364 | |
| Hempadur 47140 | 140 | | 70 | 291 | |
| Hempathane top coat 55210 | 50 | | 51 | 439 | |
| **Total for system** | **240** | **14** | **64@** | | **132** |
| Permatex NCG base coat | 160 | | 81¤ | 170 | |
| Permacor 2230/VHS | 80 | | 70¤ | 248 | |
| **Total for system** | **240** | **13.5** | **77@** | | **62** |
| Interzinc 52 | 60 | | 59¤ | 340 | |
| Intercure 99 | 180 | | 80¤ | 205 | |
| **Total for system** | **240** | **6** | **75@** | | **80** |
| Primer A | 140 | | 87 | 80 | |
| Top-coat 1 | 100 | | 88 | 75 | |
| **Total for system** | **240** | **6*** | **87@** | | **22** |
| x Based on data supplied from product data sheets<br>@ Weighed average volume solids %<br>* based on dry-to-handle time results above.<br>#Total VOC for whole system ($g/m^2$) (calculated value): | | | | | |

For each coat:

$$(\text{VOC (g/L)}) / (\text{theoretical coverage } (m^2/L) \text{ at the mentioned DFT}) = (\text{VOC for coat } (g/m^2))$$

The total VOC for the whole system equals the total amount of the contribution for each coat:

$$(\text{Total VOC for system}) = (\text{VOC for 1. coat}) + (\text{VOC for 2. coat}) + (\text{VOC for 3. coat (if any)})$$

| Table 6: Process time and VOC values (320 µm systems) | | | | | |
|---|---|---|---|---|---|
| System 1. coat/2. coat/3. coat (if any) | DFT (µm) | *Process time in paint shop (hours) | Volume solids % | VOC for coat (g/L) | #Total VOC for whole system ($g/m^2$) |
| Hempadur zinc 17320 | 60 | | 61 | 364 | |
| Hempadur 47140 | 200 | | 70 | 291 | |
| Hempathane top coat 55210 | 60 | | 51 | 459 | |

(continued)

| Table 6: Process time and VOC values (320 µm systems) | | | | | |
|---|---|---|---|---|---|
| System 1. coat/2. coat/3. coat (if any) | DFT (µm) | [*]Process time in paint shop (hours) | Volume solids % | VOC for coat (g/L) | [#]Total VOC for whole system (g/m$^2$) |
| **Total for system** | **320** | **>22** | **65[@]** | | **172** |
| Permatex NCG base coat | 240 | | 81[¤] | 170 | |
| Permacor 2230/VHS | 80 | | 70[¤] | 248 | |
| **Total for system** | **320** | **17** | **78[@]** | | **79** |
| Interzinc 52 | 60 | | 59[¤] | 340 | |
| Intercure 99 | 260 | | 80[¤] | 205 | |
| **Total for system** | **320** | **>12** | **76[@]** | | **101** |
| Primer A | 200 | | 87 | 80 | |
| Top-coat 1 | 120 | | 88 | 75 | |
| **Total for system** | **320** | **7** | **87[@]** | | **29** |
| Primer A | 200 | | 87 | n/a | |
| Top-coat 2 | 120 | | 85 | n/a | |
| **Total for system** | **320** | **7** | **86[@]** | | n/a |
| Primer A | 200 | | 87 | n/a | |
| Top-coat 3 | 120 | | 79 | n/a | |
| **Total for system** | **320** | **8** | **84[@]** | | n/a |

[@] Weighed average volume solids %
* based on dry-to-handle time results below. "Process time in paint shop" has been calculated as dry-to-walk-on time or the recommended over-coating time plus dry-to-handle time. Regarding Hempadur 47140 a recommended over-coating time has been observed (approx. 3 h at a DFT of 200 µm)
[#]Total VOC for whole system (g/m$^2$) (calculated value): determined as for Table 5.

The coating system of Primer A and Top-coat 1 supplies superior performance with respect to both process times in paint shop and VOC.

"Dry-to-handle" results at room temperature (23 °C, 50% relative humidity)

| Table 7: Dry-to-handle time | |
|---|---|
| Coating System 1. coat/2. coat | "Dry-to-handle" (h) at 320 µm |
| Hempadur zinc 17320/ Hempadur 47140/ Hempathane topcoat 55210 | >17 |
| Primer A/Top-coat 1 | 4 |
| Primer A/Top-coat 2 | 4 |
| Primer A/Top-coat 3 | 5 |
| NCG Base coat/ Permacor 2230 | 11 |
| Interzinc 52/Intercure 99 | >8 |

The systems according to the invention, reached a "dry-to-handle" state considerably faster than the commercial reference systems.

Dry-to-walk-on time at room temperature

| Table 8: Dry-to-walk-on time | | |
|---|---|---|
| Primer | DFT (μm) | Dry-to-walk-on time (h) |
| Primer A | 100 | 4 |
| Hempadur zinc 17320 | 60 | 3 |
| Interzinc 52 | 60 | 4 |
| NCG Base coat | 120 | 6 |

When compared at the dry film thicknesses specified for practical use, the primer composition according to the invention and the commercial primers Hempadur zinc 17320 and Interzinc 52 have equivalent "walk-on times", and all three seem to be faster than the commercial NCG Base Coat.

Corrosion Test - Method II

| Table 9: Corrosion test - Method II - Corrosion category C5-M High | |
|---|---|
| Coating system | Pass/Fail |
| Hempadur zinc 17320/ Hempadur 47140/ Hempathane topcoat 55210 | Fail |
| Primer A/Top-coat 1 | Pass |
| Primer A/Top-coat 2 | Pass |
| Primer A/Top-coat 3 | Pass |
| Permatex NCG Base Coat/Permacor 2230 VHS | Fail |
| Interzinc 52/ Intercure 99 | Pass |

The systems Hempadur zinc 17320/Hempadur 47140/Hempathane topcoat 55210 and Permatex NCG Base Coat/Permacor 2230 VHS do not pass the requirements to C5-M High due to excess rust creep, M-value (>1 mm). The three coating systems according to the invention passed the test. All coating systems exhibited excellent properties with respect to adhesion and lack of blistering.

## Claims

**1.** A coating system consisting of:

(i) a first layer of a primer composition comprising an epoxy-based binder system, said primer composition having a volume solids % of at least 82 %; and
(ii) a second layer of top-coat composition comprising a polyurea-based binder system, said top-coat composition having a volume solids % of at least 82 %;

wherein the weighted average volume solids % of the coating system is at least 84 %;
wherein the coating system has a total dry film thickness of 120-400 μm,
and wherein the volume solids is determined according to ISO 3233 with the modification that drying is carried out at 23 °C and 50 % relative humidity for 7 days.

2. The coating composition according to claim 1, wherein the primer composition comprises 20-35 % by solids volume of zinc.

3. The coating system according to any one of the preceding claims wherein the dry film thickness of the first layer is higher that the dry film thickness of the second layer.

4. The coating composition according to any one of the preceding claims, wherein the polyurea-based binder system comprises an isocyanate-reactive component of the formula (I):

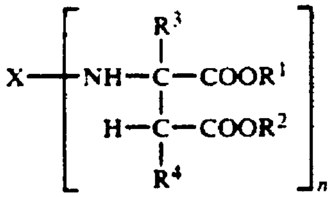

wherein X represents an organic group which has a valance of n and which is inert towards isocyanate groups at temperatures of up to 100 °C;
$R^1$ and $R^2$ each independently is selected from organic groups which are inert towards isocyanate groups at temperatures of up to 100 °C;
$R^3$ and $R^4$ each independently is selected from hydrogen and organic groups which are inert towards isocyanate groups at temperatures of up to 100 °C; and
n is an integer of at least 2.

5. The coating system according to any one of the preceding claims, wherein the "dry-to-handle" time is less than 11 hours at 20 °C, wherein the "dry-to-handle" time is determined by means of freshly painted panels (DFT typically 120-400 μm) to which are applied a pressure of 100 kg/cm$^2$ for 3 minutes after the application of the outermost paint coat; a Teflon-coated steel block (base area 3.14 cm$^2$) is pressed towards the painted surface by means of a pneumatic compression machine with a mobile arm; if the paint is not "dry-to-handle", the paint will ooze out from underneath the pressure block resulting in a visible indentation mark.

6. The coating system according to any one of the preceding claims, wherein the rust creep of the dry coating system as determined according to ISO 12944-6 is at the most 1 mm.

7. A coating system according to claim 1, which is suitable for aggressive corrosive environments, consisting of:

(i) a first layer of a zinc primer composition comprising an epoxy-based binder system and 20-40 % by solids volume of the primer composition of zinc, said primer composition having a volume solids % of at least 82 %; and
(ii) a second layer of top-coat composition comprising a polyurea-based binder system, said top-coat composition having a volume solids % of at least 82 %, and said binder system comprising an isocyanate-reactive component of the formula (I):

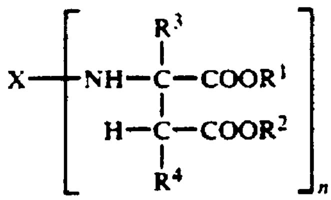

wherein X represents an organic group which has a valence of n and which is inert towards isocyanate groups at temperatures of up to 100 °C;
$R^1$ and $R^2$ each independently is selected from organic groups which are inert towards isocyanate groups at temperatures of up to 100 °C;
$R^3$ and $R^4$ each independently is selected from hydrogen and organic groups which are inert towards isocyanate groups at temperatures of up to 100 °C; and
n is an integer of at least 2;

wherein the weighted average volume solids % of the coating system is at least 84 %; and wherein the dry film thickness of the first layer is higher that the dry film thickness of the second layer, said first layer having a dry film thickness of at least 100 μm,
and wherein the volume solids is determined according to ISO 3233 with the modification that drying is carried out at 23 °C and 50 % relative humidity for 7 days.

**8.** A coating system consisting of:

(i) a first layer of a primer composition comprising an epoxy-based binder system, said primer composition having a volume solids % of at least 86 %; and
(ii) a second layer of top-coat composition comprising a polyurea-based binder system, said top-coat composition having a volume solids % of at least 78 %;

wherein the weighted average volume solids % of the coating system is at least 82 %;
wherein the coating system has a total dry film thickness of 120-400 μm,
and wherein the volume solids is determined according to ISO 3233 with the modification that drying is carried out at 23 °C and 50 % relative humidity for 7 days.

**9.** A coated structure carrying on at least a part of the surface thereof a coating system according to any one of the preceding claims in dry form.

**10.** A method for the establishment of a coated structure using a coating system consisting of a primer composition and a top-coat composition, said primer composition comprising an epoxy-based binder system and said a top-coat composition comprising a polyurea-based binder system, said method comprising:

(i) applying the primer composition onto a predetermined part of the surface of the structure thereby forming a curable primer film on said surface,
(ii) allowing said curable primer film to at least partially cure thereby forming an epoxy primer coat,
(iii) applying the top-coat composition onto the epoxy primer coat thereby forming a curable top-coat film on said epoxy primer coat, and
(iv) allowing said curable top-coat film to cure, and if necessary allowing said epoxy primer coat to fully cure, thereby forming a cured coating system consisting of the epoxy primer coat and a polyurea top-coat;

wherein primer composition has a volume solids % of at least 82 %, said top-coat composition having a volume solids % of at least 82 %; and the weighted average volume solids % of the coating system being at least 84 %, or wherein said primer composition has a volume solids % of at least 86 %, said top-coat composition having a volume solids % of at least 78 %; and the weighted average volume solids % of the coating system being at least 82 %;
wherein the coating system is applied in a total dry film thickness of 120-400 μm,
and wherein the volume solids is determined according to ISO 3233 with the modification that drying is carried out at 23 °C and 50 % relative humidity for 7 days.

**11.** The method according to claim 10, wherein the primer composition comprises 20-35 % by solids volume of zinc.

## Patentansprüche

**1.** Beschichtungssystem, bestehend aus:

(i) eine erste Schicht aus einer Grundierungszusammensetzung, die ein Epoxid-Bindemittelsystem umfasst, wobei die Grundierungszusammensetzung ein Festkörpervolumen von mindestens 82% aufweist, und
(ii) eine zweite Schicht aus einer Deckschichtzusammensetzung, umfassend ein auf Polyharnstoff basierendes Bindemittelsystem, wobei die Deckschichtzusammensetzung ein Festkörpervolumen von mindestens 82% aufweist;

wobei das gewichtete durchschnittliche Festkörpervolumen des Beschichtungssystems mindestens 84% ist;
wobei das Beschichtungssystem eine Gesamttrockenschichtdicke von 120 - 400 μm aufweist;
und wobei das Festkörpervolumen gemäß der ISO 3233 bestimmt wird, mit der Modifikation, dass die Trocknung bei 23 °C und 50 % relativer Luftfeuchtigkeit für 7 Tage durchgeführt wird.

2. Beschichtungszusammensetzung nach Anspruch 1, wobei die Grundierungszusammensetzung 20-35 % Festkörpervolumen an Zink umfasst.

3. Beschichtungssystem nach einem der vorhergehenden Ansprüche, wobei die Trockenschichtdicke der ersten Schicht höher ist als die Trockenschichtdicke der zweiten Schicht.

4. Beschichtungszusammensetzung nach einem der vorhergehenden Ansprüche, wobei das Polyharnstoff-Bindemittelsystem eine Isocyanat-reaktive Komponente der Formel (I) umfasst:

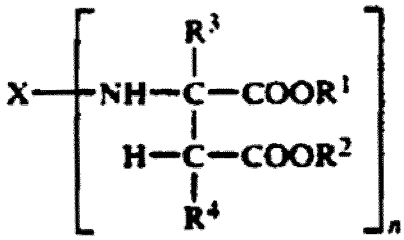

wobei X eine organische Gruppe darstellt, die eine Valenz von n aufweist und die gegenüber Isocyanatgruppen bei Temperaturen von bis zu 100 °C inert ist;
$R^1$ und $R^2$ ist jeweils unabhängig aus organischen Gruppen ausgewählt, die gegenüber Isocyanatgruppen bei Temperaturen von bis zu 100 °C inert sind;
$R^3$ und $R^4$ ist jeweils unabhängig aus Wasserstoff und organischen Gruppen ausgewählt, die gegenüber Isocyanatgruppen bei Temperaturen von bis zu 100 °C inert sind; und
n eine ganze Zahl von mindestens 2 ist.

5. Beschichtungssystem nach einem der vorhergehenden Ansprüche, wobei die Zeit "Trocken zur Bearbeitung" weniger als 11 Stunden bei 20 °C beträgt, wobei die Zeit "Trocken zur Bearbeitung" mittels frisch lackierte Platten (DFT typischerweise 120 - 400 μm) bestimmt wird, auf die ein Druck von 100 kg / $cm^2$ für 3 Minuten nach dem Auftragen der äußersten Lackschicht ausgeübt wird; ein Teflon-beschichteter Stahlblock (Grundfläche 3,14 $cm^2$) wird in Richtung der lackierten Oberfläche mittels einer pneumatischen Kompressionsmaschine mit einem beweglichen Arm gedrückt; wenn der Lack nicht "Trocken zur Bearbeitung" ist, wird der Lack unter dem Druckblock heraussickern, wodurch eine sichtbare Markierung entsteht.

6. Beschichtungssystem nach einem der vorhergehenden Ansprüche, wobei das Unterrosten des Trockenbeschichtungssystems, welches nach ISO 12944-6 bestimmt wird, höchstens 1 mm ist.

7. Beschichtungssystem nach Anspruch 1, das für aggressive, korrosive Umgebungen geeignet ist, bestehend aus:

(i) eine erste Schicht aus einer Zink-Grundierungszusammensetzung, umfassend ein Epoxid-Bindemittelsystem und 20-40% an Festkörpervolumen der Zink-Grundierungszusammensetzung, wobei die Grundierungszusammensetzung ein Festkörpervolumen von mindestens 82% aufweist; und
(ii) eine zweite Schicht der Deckschichtzusammensetzung, umfassend ein Polyharnstoff-Bindemittelsystem, wobei die Deckschichtzusammensetzung ein Festkörpervolumen von mindestens 82% aufweist, und das Bindemittelsystem eine Isocyanat-reaktive Komponente der Formel (I) aufweist:

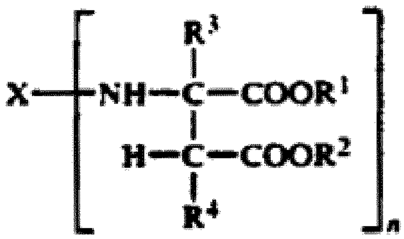

wobei X eine organische Gruppe darstellt, die eine Valenz von n aufweist und die gegenüber Isocyanatgruppen bei Temperaturen von bis zu 100 °C inert ist;

$R^1$ und $R^2$ ist jeweils unabhängig aus organischen Gruppen ausgewählt, die gegenüber Isocyanatgruppen bei Temperaturen von bis zu 100 °C inert sind;
$R^3$ und $R^4$ ist jeweils unabhängig aus Wasserstoff und organischen Gruppen ausgewählt, die gegenüber Isocyanatgruppen bei Temperaturen von bis zu 100 °C inert sind; und
n eine ganze Zahl von mindestens 2 ist;
wobei das gewichtete durchschnittliche Festkörpervolumen des Beschichtungssystems mindestens 84% ist;
wobei die Trockenschichtdicke der ersten Schicht höher ist als die Trockenschichtdicke der zweiten Schicht, wobei die erste Schicht eine Trockenschichtdicke von mindestens 100 μm aufweist,
und wobei das Festkörpervolumen gemäß der ISO 3233 bestimmt wird, mit der Modifikation, dass die Trocknung bei 23 °C und 50 % relativer Luftfeuchtigkeit für 7 Tage durchgeführt wird.

**8.** Beschichtungssystem, bestehend aus:

(i) eine erste Schicht aus einer Grundierungszusammensetzung, die ein Epoxid-Bindemittelsystem umfasst, wobei die Grundierungszusammensetzung einen Festkörpervolumen von mindestens 86% aufweist; und
(ii) eine zweite Schicht aus einer Deckschichtzusammensetzung, umfassend ein auf Polyharnstoff basierendes Bindemittelsystem, wobei die Deckschichtzusammensetzung ein Festkörpervolumen von mindestens 78% aufweist;

wobei das gewichtete durchschnittliche Festkörpervolumen des Beschichtungssystems mindestens 82% ist;
wobei das Beschichtungssystem eine Gesamttrockenschichtdicke von 120 - 400 μm aufweist;
und wobei das Festkörpervolumen gemäß der ISO 3233 bestimmt wird, mit der Modifikation, dass die Trocknung bei 23 °C und 50 % relativer Luftfeuchtigkeit für 7 Tage durchgeführt wird.

**9.** Beschichtete Struktur, auf der mindestens ein Teil seiner Oberfläche eine Beschichtung nach einem der vorhergehenden Ansprüche in trockener Form aufgetragen ist.

**10.** Verfahren zur Herstellung einer beschichteten Struktur unter Verwendung eines Beschichtungssystems, bestehend aus einer Grundierungszusammensetzung und einer Deckschichtzusammensetzung, wobei die Grundierungszusammensetzung ein Epoxid-Bindemittelsystem umfasst und die Deckschichtzusammensetzung ein Polyharnstoff-Bindemittelsystem umfasst, wobei das Verfahren umfasst:

(i) Aufbringen der Grundierungszusammensetzung auf einen vorgegebenen Teil der Oberfläche der Struktur, wodurch eine härtbare Grundierungsschicht auf der Oberfläche gebildet wird,
(ii) Ermöglichen, dass die härtbare Grundierungsschicht mindestens teilweise aushärtet, wodurch eine Epoxid-Grundierungsschicht gebildet wird,
(iii) Aufbringen der Deckschichtzusammensetzung auf die Epoxid-Grundierungsschicht, wodurch ein härtbarer Deckschichtfilm auf der Epoxid-Grundierungsschicht gebildet wird, und
(iv) Ermöglichen, dass der härtbare Deckschichtfilm aushärtet, und wenn notwendig, ermöglichen, dass die Epoxid-Grundierungsschicht vollständig aushärtet, wodurch ein ausgehärtetes Beschichtungssystem gebildet wird, bestehend aus der Epoxid-Grundierungsschicht und einer Polyharnstoff-Deckschicht;

wobei die Grundierungszusammensetzung ein Festkörpervolumen von mindestens 82% aufweist, wobei die Deckschichtzusammensetzung ein Festkörpervolumen von mindestens 82% aufweist, und das gewichtete durchschnittliche Festkörpervolumen des Beschichtungssystems mindestens 84% ist, oder
wobei die Grundierungszusammensetzung ein Festkörpervolumen von mindestens 86% aufweist, wobei die Deckschichtzusammensetzung ein Festkörpervolumen von mindestens 78% aufweist; und das gewichtete durchschnittliche Festkörpervolumen des Beschichtungssystems mindestens 82% ist;
wobei das Beschichtungssystem in einer Gesamttrockenschichtdicke von 120 - 400 μm aufgebracht wird,
und wobei das Festkörpervolumen gemäß der ISO 3233 bestimmt wird, mit der Modifikation, dass die Trocknung bei 23 °C und 50 % relativer Luftfeuchtigkeit für 7 Tage durchgeführt wird.

**11.** Verfahren nach Anspruch 10, wobei die Grundierungszusammensetzung 20-35% an Zink-Feststoffvolumen umfasst.

## Revendications

**1.** Système de revêtement composé de :

(i) une première couche d'une composition primaire comprenant un système liant à base d'époxy, ladite composition primaire ayant une teneur volumétrique en matières solides d'au moins 82 % ; et

(ii) une deuxième couche de composition de revêtement de finition comprenant un système liant à base de polyurée, ladite composition de revêtement de finition ayant une teneur volumétrique en matières solides d'au moins 82 % ;

dans lequel la teneur volumétrique moyenne pondérée en matières solides du système de revêtement est d'au moins 84 % ;
dans lequel le système de revêtement a une épaisseur de film sec totale de 120-400 μm,
et dans lequel la teneur volumétrique en matières solides est déterminée conformément à ISO 3233 avec la modification que le séchage soit réalisé à 23° C et 50 % d'humidité relative pendant 7 jours.

**2.** Système de revêtement selon la revendication 1, dans lequel la composition primaire comprend 20-35 % de volume de particules solides de zinc.

**3.** Système de revêtement selon l'une quelconque des revendications précédentes, dans lequel l'épaisseur de film sec de la première couche est supérieure à l'épaisseur de film sec de la deuxième couche.

**4.** Système de revêtement selon l'une quelconque des revendications précédentes, dans lequel le système liant à base de polyurée comprend un composant réactif à l'isocyanate de la formule (I) :

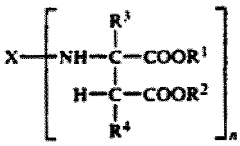

dans lequel X représente un groupe organique qui a une valeur de n et qui est inerte vers les groupes d'isocyanate à des températures allant jusqu'à 100 °C ;
$R^1$ et $R^2$ sont chacun sélectionnés indépendamment parmi des groupes organiques qui sont inertes vers les groupes d'isocyanate à des températures allant jusqu'à 100 ° C ;
$R^3$ et $R^4$ sont chacun sélectionnés indépendamment parmi l'hydrogène et des groupes organiques qui sont inertes vers les groupes d'isocyanate à des températures allant jusqu'à 10° C ; et n est un nombre entier d'au moins 2.

**5.** Système de revêtement selon l'une quelconque des revendications précédentes, dans lequel le temps de séchage est inférieur à 11 heures à 20° C, dans lequel le temps de séchage est déterminé au moyen de panneaux fraîchement peints (épaisseur de film sec typiquement 120-400 μm) auxquels est appliquée une pression de 100 kg/$cm^2$ pendant 3 minutes après l'application du revêtement de peinture externe ; un bloc d'acier revêtu en téflon (surface de base 3.14 $cm^2$) est pressé vers la surface peinte au moyen d'une machine à compression pneumatique avec un bras mobile ; si la peinture n'est pas sèche à point, la peinture suintera par le dessous du bloc de pression donnant lieu à une marque visible en dentelure.

**6.** Système de revêtement selon l'une quelconque des revendications précédentes, dans lequel la tendance de la rouille à se propager sous la peinture du système de revêtement sec, déterminée conformément à ISO 12944-6, est au plus 1 mm.

**7.** Système de revêtement selon la revendication 1 qui est approprié aux environnements corrosifs agressifs, composé de :

(i) une première couche d'une composition primaire de zinc comprenant un système liant à base d'époxy et 20-40 % en volume de particules solides de la composition primaire du zinc, ladite composition primaire ayant une teneur volumétrique en matières solides d'au moins 82 % ; et

(ii) une deuxième couche de la composition de revêtement de finition comprenant un système liant à base de polyurée, ladite composition de revêtement de finition ayant une teneur volumétrique en matières solides d'au moins 82%, et ledit système liant comprenant un composant réactif à l'isocyanate de la formule (I) :

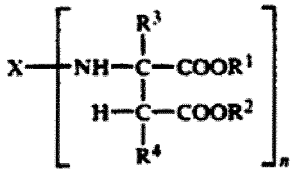

dans lequel X représente un groupe organique qui a une valeur de n et qui est inerte vis-à-vis des groupes d'isocyanate à des températures allant jusqu'à 100 °C ;
$R^1$ et $R^2$ sont chacun sélectionnés indépendamment parmi des groupes organiques qui sont inertes vis-à-vis des groupes d'isocyanate à des températures allant jusqu'à 100 °C;
$R^3$ et $R^4$ sont chacun sélectionnés indépendamment parmi l'hydrogène et des groupes organiques qui sont inertes vis-à-vis des groupes d'isocyanate à des températures allant jusqu'à 100 °C; et n est un nombre entier d'au moins 2;
dans lequel la teneur volumétrique moyenne pondérée en matières solides du système de revêtement est d'au moins 84 % ; et
dans lequel l'épaisseur de film sec de la première couche est supérieure à l'épaisseur de film sec de la deuxième couche, ladite première couche ayant une épaisseur de film sec d'au moins 100 μm,
et dans lequel la teneur volumétrique en matières solides est déterminée conformément à ISO 3233 avec la modification que le séchage est réalisé à 23° C et 50 % d'humidité relative pendant 7 jours.

**8.** Système de revêtement composé de :

(i) une première couche d'une composition primaire comprenant un système liant à base d'époxy, ladite composition primaire ayant une teneur volumétrique en matières solides d'au moins 86 % ; et
(ii) une deuxième couche de la composition de revêtement de finition comprenant un système liant à base de polyurée, ladite composition de revêtement de finition ayant une teneur volumétrique en matières solides d'au moins 78 % ;

dans lequel la teneur volumétrique moyenne pondérée en matières solides du système de revêtement est d'au moins 82 % ;
dans lequel le système de revêtement a une épaisseur de film sec totale de 120-400 μm,
et dans lequel la teneur volumétrique en matières solides est déterminée conformément à ISO 3233 avec la modification que le séchage est réalisé à 23° C et 50 % d'humidité relative pendant 7 jours.

**9.** Structure revêtue qui porte sur au moins une partie de sa surface un système de revêtement selon l'une quelconque des revendications précédentes sous forme sèche.

**10.** Procédé pour établir une structure revêtue en utilisant un système de revêtement composé d'une composition primaire et d'une composition de revêtement de finition, ladite composition primaire comprenant un système liant à base d'époxy et ladite composition de revêtement de finition comprenant un système liant à base de polyurée, ladite méthode comprenant :

(i) appliquer la composition primaire sur une partie prédéterminée de la surface de la structure pour former un film primaire durcissant sur ladite surface,
(ii) permettre audit film primaire durcissant de durcir au moins partiellement, formant de cette manière un revêtement primaire époxy,
(iii) appliquer la composition de revêtement de finition sur le revêtement primaire époxy pour former un film de revêtement de finition durcissant sur ledit revêtement primaire époxy, et
(iv) permettre audit film de revêtement de finition durcissant de durcir, et, si nécessaire, permettre audit revêtement primaire époxy de durcir complètement, pour former un système de revêtement durci composé du revêtement primaire époxy et d'un revêtement de finition de polyurée;

dans lequel la composition primaire a une teneur volumétrique en matières solides d'au moins 82 %, ladite composition de revêtement de finition ayant une teneur volumétrique en matières solides d'au moins 82 %; et la teneur volumétrique moyenne pondérée en matières solides du système de revêtement étant d'au moins 84%, ou
dans lequel ladite composition primaire a une teneur volumétrique en matières solides d'au moins 86%, ladite composition de revêtement de finition ayant une teneur volumétrique en matières solides d'au moins 78 % ; et la teneur volumétrique moyenne pondérée en matières solides du système de revêtement étant d'au moins 82 % ;

dans lequel le système de revêtement est appliqué dans une épaisseur de film sec totale de 120-400 μm, et dans lequel la teneur volumétrique en matières solides est déterminée conformément à ISO 3233 avec la modification que le séchage est réalisé à 23° C et 50 % d'humidité relative pendant 7 jours.

**11.** Procédé selon la revendication 10, dans lequel la composition primaire comprend 20-35 % en volume de particules solides de zinc.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006119770 A
- US 5987727 A
- EP 0257513 A
- US 5126170 A
- WO 2008125610 A